# EUROPEAN PATENT APPLICATION

(11) **EP 3 511 821 A1**
(43) Date of publication of application: **17.07.2019**
(21) Application number: 18157408.8
(22) Date of filing: 19.02.2018
(51) Int. Cl.: G06F 8/60, H04L 29/06, G06F 9/48, H04L 12/24

(54) **METHOD AND SYSTEM FOR MANAGING ACCESS TO ARTIFACTS IN A CLOUD COMPUTING ENVIRONMENT**

(30) Priority: 15.01.2018 EP 18151637
(71) Applicant: Siemens Aktiengesellschaft, 80333 München (DE)
(72) Inventor: The designation of the inventor has not yet been filed

(57) **Abstract**

The present invention relates to a method and a system for managing access to artifacts in a cloud computing environment. In one embodiment, a method of managing access to artifacts deployed on a cloud computing system by authorized tenants comprises receiving a request to access an artifact deployed on the cloud computing system from a tenant device associated with a tenant user. The request comprises a tenant identifier of the tenant user, and an artifact identifier. The artifact associated with a provider. The method comprises determining whether the tenant user is authorized to access the artifact associated with the artifact identifier based on at least one role and associated permissions to access the artifact using the tenant identifier. Moreover, the method comprises providing access to the artifact associated with the artifact identifier to the tenant device when the tenant user is authorized to access the requested artifact.

## Description

The present invention relates to the field of a cloud computing system and more particularly to a cloud computing system for managing access to artifacts by a plurality of tenants and a method thereof.

With advent of cloud computing technology, a large number of devices are connected to a cloud computing system via the Internet. The devices may be remotely located from the cloud computing system. The devices can be equipments, sensors, actuators, robots, machinery in an industrial set-up(s). The devices can be medical devices and equipments in a healthcare facility. The devices can be home appliances or office appliances.

The cloud computing system may enable remote configuring, monitoring, controlling, and maintaining connected devices. Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via graphical user interface (e.g., of web applications). The insights and alerts may enable to control and maintain the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographical distributed, connected with each other via a network. A dedicated platform (hereinafter referred to as 'cloud platform') is installed on the servers/processors for providing above functionality as a service (hereinafter referred to as 'cloud service'). The cloud platform may comprise a plurality of software programs executed on one or more servers or processors of the cloud computing system to enable delivery of the requested service to the devices and its users (hereinafter referred to as tenants).

One or more artifacts are deployed in the cloud computing system to provide different services to the tenants. The artifacts may include applications, simulation models, engineering configuration, application programming interfaces (APIs), and so on. For example, an application for monitoring operation of robots in a manufacturing facility may be deployed as an artifact. The application may be capable of analyzing the data collected from the robots over a period of time. The tenant may subscribe to a cloud service which analyzes data associated with robots (for which the tenant is responsible) using the application, and displays the outcome of analysis (e.g., outliers) to the tenant via a web application on the tenant device.

The cloud platform may enable a plurality of developers to develop the one or more artifacts. Also, the cloud platform may facilitate providers to deploy one or more artifacts developed by the developers in the cloud computing system to deliver cloud services to one or more tenants of the cloud platform. A tenant may get access to artifacts deployed by different providers via the cloud platform by subscribing corresponding cloud services. In other words, different tenants may have access to different artifacts from different providers. It is possible that one or more unauthorized tenants may get access to artifacts of different providers without subscribing to the corresponding cloud services. The unauthorized tenants may access sensitive information belonging to authorized tenants as well as perform one or more vulnerable operations (such as modifying parameters) using the artifacts. Thus, unauthorized access of the artifacts may lead to higher security risks.

In light of the above, there is a need to for a cloud computing system which ensures that authorized tenant users have access to subscribed artifacts deployed therein by various providers.

Therefore, it is an object of the present invention to provide a cloud computing environment comprising a cloud computing system configured to manage access to artifacts by tenant users.

The object of the present invention is achieved by a method of managing artifacts deployed on a distributed system to one or more tenants. The method comprises receiving a request to deploy at least one artifact on the cloud computing system from a provider. The request comprises a provider identifier associated with the provider and an artifact identifier associated with the artifact. Exemplary artifacts may include applications (application for monitoring asset performance), simulation models, engineering configurations, digital twin models, code snippets, Application programming Interfaces (APIs), security related software, firmware and so on. The method comprises creating at least one role corresponding to the requested artifact by one or more authorized tenant users. Furthermore, the method comprises defining one or more permissions to access the requested artifact by the one or more authorized tenant users, and associating the one or more permissions to the assigned role associated with the artifact. Also, the method comprises deploying the artifact on the cloud computing system based on the request from the provider, moreover, the method comprises provisioning the artifact to one or more tenants of the cloud computing system so that the one or more tenants can access the artifact using tenant devices connectively coupled to the cloud computing system.

In a preferred embodiment, the method comprises assigning the artifact to at least one tenant user by each of the tenants. In this preferred embodiment, the method comprises assigning the at least one role associated with the artifact to the at least one tenant user, and assigning the one or more permissions associated with the assigned role to the at least one tenant user. The at least one tenant user is authorized to access the artifact based on the assigned role and the associated permissions.

In the preferred embodiment, the method comprises storing a look-up table comprising the artifact identifier associated with the deployed artifact, the at least one role, the associated permissions and tenant identifier associated with the tenant users authorized to access the artifact corresponding to the role.

The object of the present invention is achieved by a method of managing access to artifacts deployed in a cloud computing system by authorized tenants. The method comprises receiving a request to access an artifact deployed on the cloud computing system from a tenant device associated with a tenant user. The request comprises a tenant identifier of the tenant user, and an artifact identifier. The artifact associated with a provider. The method comprises determining whether the tenant user is authorized to access the artifact associated with the artifact identifier based on at least one role and associated permissions to access the artifact using the tenant identifier. Moreover, the method comprises providing access to the artifact associated with the artifact identifier to the tenant device when the tenant user is authorized to access the requested artifact.

Furthermore, the method comprises rejecting the request to access the artifact associated with the artifact identifier when the tenant user is not authorized to access the requested artifact, and sending a notification indicating that the tenant user is not authorized to access the artifact associated with the artifact identifier to the tenant device.

In a preferred embodiment, the method comprises determining whether there exists an active session with the tenant device based on the tenant identifier, and establishing a session with the tenant device when there exists no active session with the tenant device.

In the preferred embodiment, the method comprises determining at least one role defined for the artifact based on the artifact identifier. The method comprises determining one or more permissions assigned to the role defined for the artifact. The method also comprises retrieving a role and associated permissions assigned to the tenant user using the tenant identifier. The method further comprises determining whether the role assigned to the tenant user matches with the role defined for the artifact. The method comprises determining whether the permissions associated with the role of the tenant user matches with the permissions associated with the role defined for the artifact if the role assigned to the tenant user matches with the role defined for the artifact. The method comprises rejecting the request to access the artifact if the role and/or the permissions assigned to the tenant user does not matches the role and the associated permissions defined for the artifact.

In the preferred embodiment, the method comprises generating an access token for providing access to the requested artifact. The access token comprises the role and the associated permissions granted to the tenant user, the artifact identifier associated with the artifact, and the tenant identifier associated with the tenant user. The method comprises providing access to the requested artifact to the tenant user based on the access token. The access token is valid during the corresponding active session between the artifact and the tenant user.

In the preferred embodiment, the method comprises performing at least one operation requested by the tenant user by executing the artifact deployed in the cloud computing environment.

In the preferred embodiment, the method comprises receiving a request to perform an operation associated with the artifact deployed in the cloud computing system from the tenant user. The request comprises a tenant identifier, an artifact identifier, and a command to perform the operation. The method comprises determining whether a session with the tenant user to access the artifact is active using the tenant identifier. The method comprises retrieving a valid access token associated with the session with the tenant user from a token database using a session identifier associated with the active session if the session with the tenant user is active. The method comprises performing the requested operation by executing artifact files associated with the artifact deployed in the cloud computing system. The method comprises sending a response to the tenant device upon performing the requested operation.

The object of the present invention is also achieved by a system comprising one or more processing units, and one or more memory units accessible by the one or more processing units. At least one memory unit comprises machine-readable instructions stored therein and executable by the one or more processing units, that may cause the one or more processing units to perform method steps described above.

The object of the present invention is also achieved by a computing environment comprising the above-mentioned system, and one or more tenant devices communicatively coupled to the system.

The object of the present invention is achieved by a computer program product, having machine-readable instructions stored therein, that when executed by one or more processing units, cause the one or more processing units to perform method steps described above.

The above-mentioned and other features of the present invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a cloud computing environment, according to an embodiment of the present invention;
- FIG 2: is a schematic representation of the cloud computing environment for managing access to artifacts by tenants, according to one embodiment of the present invention;
- FIG 3: is a process flowchart illustrating an exemplary method of provisioning artifacts deployed on a cloud computing system to tenants, according to an embodiment of the present invention;
- FIG 4: is a process flowchart illustrating a method of managing access to the artifacts deployed in the cloud computing system, according to an embodiment of the present invention;
- FIG 5: is a process flowchart illustrating a method of performing one or more operations associated with an artifact based on a request from an authorized tenant user, according to an embodiment of the present invention;
- FIG 6A: is a schematic representation of a lookup table storing role(s) corresponding to each of artifacts deployed by various providers, according to an embodiment of the present invention;
- FIG 6B: is a schematic representation of a lookup table storing permissions corresponding to roles created for the artifacts, according to an embodiment of the present invention;
- FIG 7: is a schematic representation of a lookup table storing identifiers of tenants who have subscribed to one or more artifacts deployed by various providers, according to an embodiment of the present invention;
- FIG 8: is a schematic representation of a lookup table storing identifiers of tenant users who are authorized to access one or more artifacts based on assigned roles, according to an embodiment of the present invention;
- FIG 9: is a schematic representation of a lookup table storing permissions associated with roles assigned to each tenant user to access the artifacts, according to an embodiment of the present invention;
- FIG 10: is a schematic representation of a lookup table storing status of sessions associated with the artifacts, according to an embodiment of the present invention;
- FIG 11: is a schematic representation of a lookup table storing relationship between active sessions and access tokens, according to an embodiment of the present invention;
- FIG 12: illustrates a block diagram of an access control module of FIG 1 capable of managing access to the artifacts by authorized tenant user, according to an embodiment of the present invention;
- FIG 13: is a flow diagram illustrating an exemplary method of providing access to the artifacts to authorized tenant users, according to an embodiment of the present invention;
- FIG 14: is a graphical user interface which enables a provider to deploy an artifact in a productive environment; and
- FIG 15: is a graphical user interface displaying status of the application assigned to tenants.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

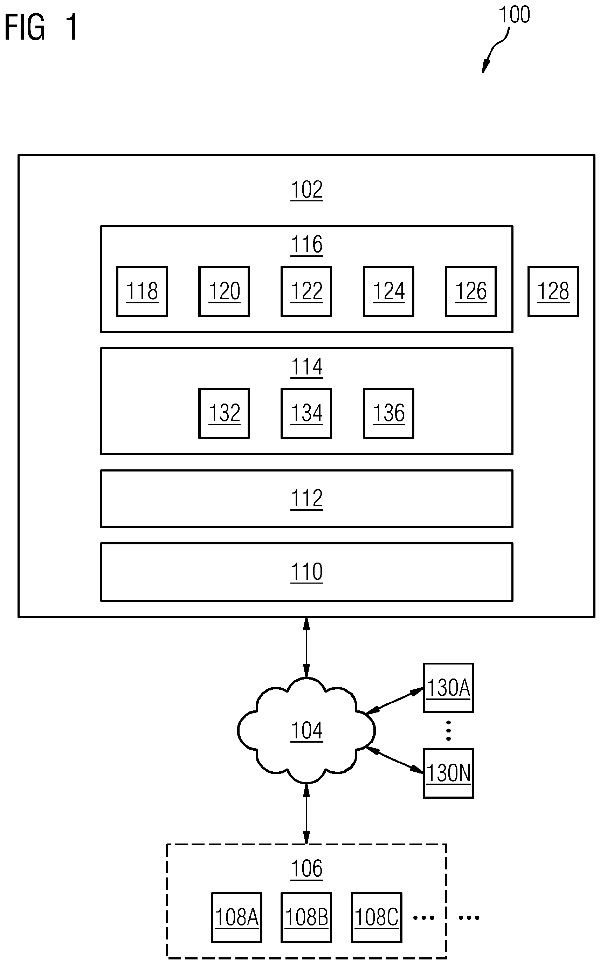

FIG 1 is a schematic representation of a cloud computing environment 100, according to an embodiment of the present invention. Particularly, FIG 1 depicts the cloud computing system 102 capable of providing cloud services for managing an industrial plant 106 comprising assets 108A-N. The cloud computing system 102 is connected to assets 108A-N in the industrial plant 106 via a network 104 (e.g., Internet). The assets 108A-N may include servers, robots, switches, automation devices, motors, valves, pumps, actuators, sensors and other industrial equipments. Although, FIG 1 illustrates the cloud computing system 102 connected to a single industrial plant 106, one skilled in the art can envision that the cloud computing system 102 can be connected to several industrial plants 106 located at different locations via the network 104.

In order to access the cloud services, one or more artifacts are required to be deployed on a cloud platform, which are accessed by personnel (e.g., field engineer, operator, etc.) and assets in the industrial plant 106 to use the cloud services. Therefore, the cloud computing system 102 which is capable of providing access to artifacts throughout its lifecycle is provided. Exemplary artifacts may include applications (application for monitoring asset performance), simulation models, engineering configuration, digital twin models, code snippets, APIs, security applications, firmware and so on.

The cloud computing system 102 is also connected to devices 130A-N via the network 104. The devices 130A-N can access the cloud computing system 102 for managing and accessing artifacts, and accessing cloud services. The devices 130A-N can be a laptop computer, desktop computer, tablet computer, smartphone and the like. The devices 130A-N can access cloud services (such as providing performance visualization of assets 108A-N) via a web browser.

The industrial plants 106 which have subscribed to the cloud services from the cloud computing system 102 are hereinafter referred to as 'tenants' in the context of subscribing access to one or more artifacts deployed on the cloud computing system 102. The assets 108A-N and the users of the devices 130A-N (hereinafter tenant devices') associated with each industrial plant (i.e., tenant) are commonly referred to as tenant users' who are authorized to accessing one or more artifacts subscribed by the tenants.

The cloud computing system 102 may be a public cloud, private cloud or a hybrid cloud configured to provide dedicated cloud services to tenants. The cloud computing system 102 comprises a network interface 110, hardware resources and OS 112, and a cloud platform 114. The network interface 110 enables communication between the cloud computing system 102 and the industrial plants 106. Also, the network interface 110 enables communication between the cloud computing system 102 and the devices 130A-N.

The hardware resources and OS 112 may include one or more servers on which an operating system (OS) is installed. The servers may comprise one or more processing units, one or more storage devices (e.g., memory units) for storing data (e.g., plant data, asset data, tenant data) and machine-readable instructions (e.g., binary code, APIs), and other peripherals required for providing cloud computing functionality.

The cloud platform 114 is a platform which enables functionalities such as data storage, data analysis, data visualization, data communication, etc. using the hardware resources and OS 112; and delivers the aforementioned cloud services using artifacts deployed therein. The cloud platform 114 may comprise a combination of dedicated hardware and software built on top of the hardware and OS 112.

An artifact lifecycle management module 116 is deployed on the cloud platform 114 for managing artifacts responsible for delivering cloud services throughout its lifecycle. The cloud platform 114 comprises an access control module 132 for managing secured access to artifacts by authorized tenant users. The cloud platform 114 also comprises an artifact execution module 136 for executing artifact files to process requests from tenant users. The cloud platform 114 may additionally comprise modules required for delivering cloud services to its tenants.

The artifact lifecycle management module 116 is stored in the form of machine-readable instructions in the one or more storage devices and executable by the one or more servers. The artifact lifecycle management module 116 comprises an artifact development module 118, an artifact validation module 120, an artifact deployment module 122, an artifact provisioning module 124, and an artifact monitoring module 126.

The artifact development module 118 is configured for generating a development environment for developing artifacts. The development environment is made accessible via a graphical user interface of the user device 130A-N. The artifact development module 118 is configured for generating an artifact package of the artifact using the development environment. If the artifact is an application, the artifact package may include binary code and a manifest file. Additionally, the artifact development module 118 is configured to testing the artifact package using one or more test scenarios via the development environment. The artifact development module 118 is configured to store the artifact in the artifact repository 128 for validation and deployment purposes. The artifact development module 118 is configured to receive feedback on the artifact from the artifact validation module 120, the artifact deployment module 122 and the tenant devices 130A-N. The artifact development module 118 is configured to process the feedback and make necessary changes to the artifact so that the artifact can be deployed and used without any issues.

The artifact validation module 120 is configured to automatically validate an artifact to be deployed on the cloud platform 114. For example, the artifact validation module 120 performs one or more validation checks on the artifact and generates an artifact signature once the artifact is successfully validated.

The artifact deployment module 122 is configured to determine whether the artifact is genuine using the artifact signature. The artifact deployment module 122 is configured to create one or more roles for accessing the artifact if the artifact is genuine. For example, the roles created for the artifact may include 'admin' role and 'standard'. Also, the artifact deployment module 122 defines a plurality of permissions for accessing the artifact. For example, the permissions can be 'read' permission, 'write' permission, 'delete' permission, and so on. The artifact deployment module 122 is configured to associate one or more permissions with each role created for the artifact. For example, the 'admin' role may have permissions like 'read', 'write', 'delete', and so on whereas the 'standard' role may have 'read' permission. The artifact deployment module 122 is configured to store the roles defined for the artifact and the permissions associated with each role in a lookup table (e.g., lookup tables 600 and 650) maintained in an identity and access control (IAM) database 134. In one embodiment, the lookup table may be maintained for each artifact deployed by each provider. In another embodiment, the lookup table is maintained for each provider deploying the artifacts on the cloud computing system 102.

The artifact deployment module 122 is configured to deploy the validated artifact in a productive environment of the cloud platform 114. The productive environment is a live system which makes the artifact usable by the tenants 106. In other words, the tenant can subscribe and accesses the artifact when deployed in a productive environment.

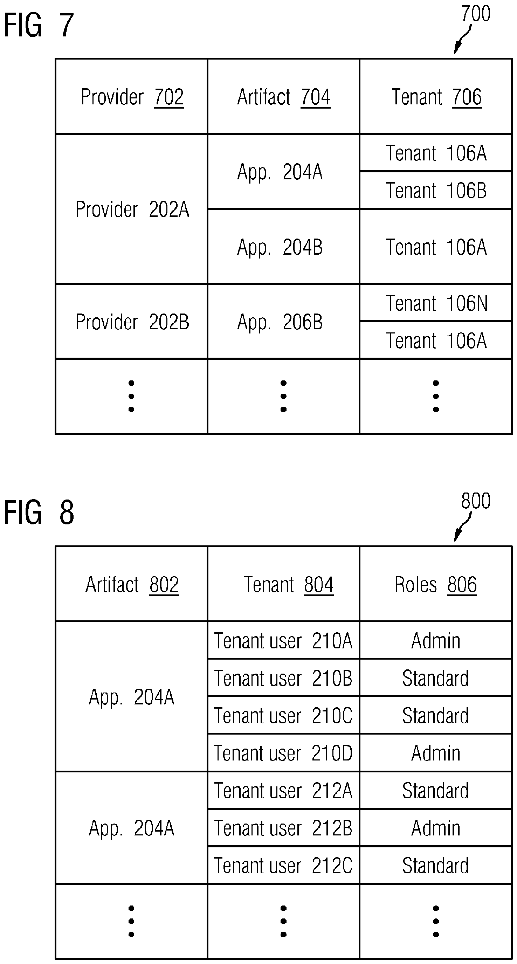

The artifact provisioning module 124 is configured to provision the deployed artifact to one or more tenants 106 of the cloud platform 114. In other words, artifact provisioning module 124 is configured to assign the artifact to requesting tenants 106. Accordingly, each tenant assigns the artifact to its tenant users (assets 108A-N, devices 130A-N). In exemplary implementation, said each tenant assigns at least one role defined for the artifact assigned to said each tenant. Consequently, the tenant user has permissions corresponding to the assigned role to access the artifact. The roles and permissions corresponding to the artifact assigned to the tenant users are stored in the lookup table (e.g., the lookup tables 700, 800, and 900 of FIGs 7, 8 and 9) maintained in the IAM database 134.

The artifact monitoring module 126 is configured to monitor behavior of the artifact deployed in the productive environment during runtime (execution time), and provide continuous feedback to the artifact development module 118, the artifact deployment module 122, and the tenants 106 via the tenant devices 130A-N.

The access control module 132 is configured to determine whether a tenant user is authorized to access an artifact based on the role and the permissions assigned to the tenant user when a request to access the artifact is received from the tenant user. The access control module 132 generates an access token for providing access to the artifact. The access token may comprise the role and the associated permissions granted to the tenant user, the tenant identifier of the tenant user, and the artifact identifier of the artifact. The access control module 132 sends a notification indicating that the authorized tenant user wants to access the artifact to the artifact execution module 136. Accordingly, the artifact execution module 136 is configured to provide access to the artifact to the authorized tenant user. Subsequently, the artifact execution module 136 is configured to perform one or more operations by executing the artifact files based on request(s) from the tenant user and send a response to the tenant user. For example, the tenant user may request for aggregated time series data (e.g., speed of motor for one hour) associated with a motor to a data visualization API via a web interface of the tenant device 130A. The artifact execution module 136 may execute the artifact files of the data visualization API to fetch the aggregated time series data associated with the motor and provide visualization of the aggregated time series data on the web interface of the tenant device.

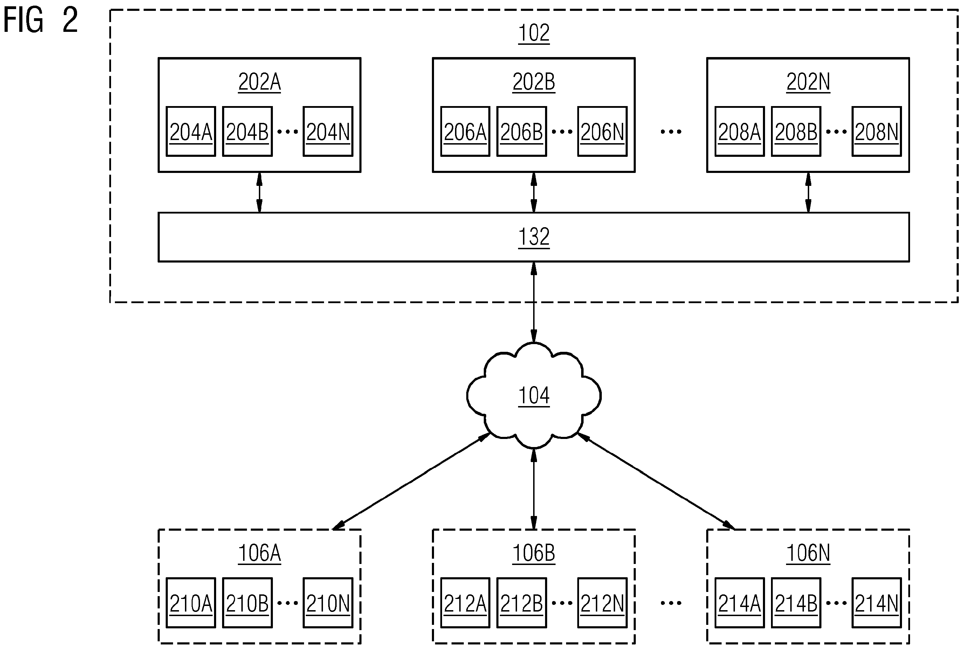

FIG 2 is a schematic representation of the cloud computing environment 100 for managing access to artifacts by tenants, according to one embodiment of the present invention. As shown in FIG 2, the cloud computing environment 100 comprises the cloud computing system 102 communicatively connected to tenant devices associated with tenant users 210A-N, 212A-N, and 214A-N via the network 104 (e.g., Internet).

The tenant users 210A-N, 212A-N, and 214A-N are associated with tenants 106A-N respectively. The tenant devices associated with the tenant users 210A-N, 212A-N, and 214A-N may be assets (e.g., assets 108A-N) and devices (e.g., devices 130A-N) such as desktop computer, laptop computer, tablet computer, and devices including a display unit. Also, a tenant device can be a tenant user (e.g., an Internet-of-things (IoT) gateway).

The cloud computing system 102 comprises a plurality of artifacts 204A-N, 206A-N, and 208A-N. The artifacts 204A-N, 206A-N and 208A-N may be deployed on the cloud computing system 102 by providers 202A-N respectively. The artifacts 204A-N, 206A-N, and 208A-N are developed and tested via the cloud computing system 102 by developers and assigned to the respective providers 202A-N for deployment on the cloud computing system 102. Each of the artifacts 204A-N, 206A-N, and 208A-N, when deployed, is capable of delivering a specific functionality as a part of cloud service to the tenants 106A-N.

Each of the artifacts 204A-N, 206A-N, and 208A-N has one or more roles and associated permissions pre-defined by the respective providers 106A-N. The roles and associated permissions may authorize the tenant users 210A-N, 212A-N, and 214A-N associated with the respective tenants 106A-N to access one or more of the artifacts 204A-N, 206A-N, and 208AN.

Each of the providers 202A-N may provision respective one or more artifacts 204A-N, 206A-N, and 208A-N to the tenants 106A-N. Accordingly, each of the tenants 106A-N may assign any of the provisioned artifacts 204A-N, 206A-N, and 208A-N to the respective tenant users 210A-N, 212A-N, and 214A-N. Also, each of the tenants 106A-N may assign at least one role and associated permissions defined for the assigned artifacts to the one or more tenant users 210A-N, 212A-N, and 214A-N. This would authorize the tenant users 210A-N, 212A-N and 214A-N to access the assigned artifacts of specific providers based on the assigned role and permissions. This may help ensure that authorized tenant users have access to specific artifacts based on assigned role and permission defined for the specific artifacts, thereby exercising appropriate access control with respect to the artifacts deployed on the cloud computing system 102. The stepwise process of managing access to the artifacts is described in greater detail in the description that follows.

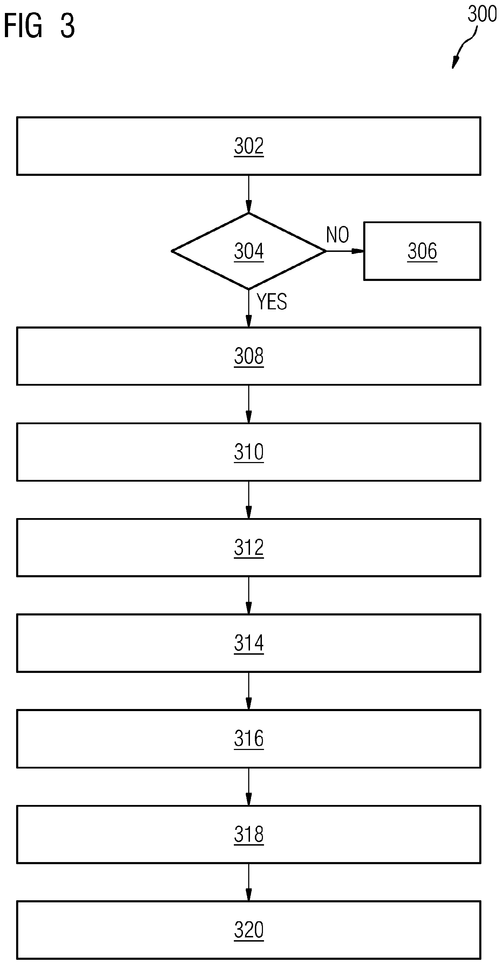

FIG 3 is a process flowchart 300 illustrating an exemplary method of provisioning artifact deployed on the cloud computing system 102 to tenants, according to an embodiment of the present invention. At step 302, a request to deploy at least one artifact on the cloud computing system is received from a provider. The request comprises a provider identifier associated with the provider and an artifact identifier associated with the artifact. At step 304, it is determined whether the artifact is genuine using the artifact signature.

If the artifact is not genuine, at step 306, the request to deploy the artifact is rejected. If the artifact is genuine, at step 308, at least one role corresponding to the requested artifact by one or more authorized tenant users is created. At step 310, one or more permissions to access the requested artifact by the one or more authorized tenant users are defined. At step 312, the one or more permissions are associated to the assigned role associated with the artifact.

At step 314, the artifact is deployed on the cloud computing system based on the request from the provider. At step 316, the artifact is provisioned to one or more tenants of the cloud computing system. At step 318, the artifact is assigned to at least one tenant user by each of the tenants. In one embodiment, the at least one role associated with the artifact is assigned to the at least one tenant user. Also, the one or more permissions associated with the assigned role are assigned to the at least one tenant user. Accordingly, the at least one tenant user is authorized to access the respective artifact based on the assigned role and the associated permissions.

At step 320, a look-up table comprising the artifact identifier associated with the deployed artifact is stored in the identity and access control database, the at least one role, the associated permissions and tenant identifier associated with the tenant users authorized to access the artifact corresponding to the role.

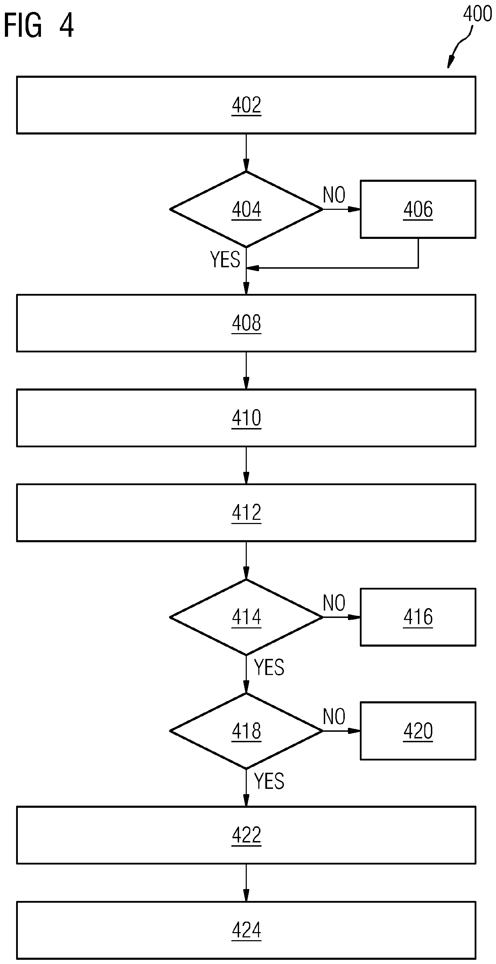

FIG 4 is a process flowchart 400 illustrating a method of managing access to artifacts deployed in the cloud computing system 102, according to an embodiment of the present invention. At step 402, a request to access an artifact deployed on the cloud computing system 102 is received from a tenant device associated with a tenant user. The request comprises a tenant identifier of the tenant user, and an artifact identifier associated with the artifact.

At step 404, it is determined whether there exist an active session with the tenant device based on the tenant identifier and the artifact identifier. An active session enables communication between the tenant user and one or more artifacts. In one embodiment, the active session may be specific to each artifact, i.e., the tenant user can access a specific artifact over the active session. In another embodiment, the active session may be specific to each tenant user, i.e., the tenant user can access different artifacts over the active session. If it is determined that there exists no active session with the tenant device, then at step 406, a new active session is established with the tenant device and step 408 is performed.

If it is determined that the active session exists with the tenant user, then at step 408 is performed. At step 408, at least one role defined for the artifact is determined based on the artifact identifier. For example, a role can be administrator or user. At step 410, one or more permissions assigned to the role defined for the artifact are determined. For example, one or more permissions may include read permission, write permission, copy permission, delete permission and so on.

At step 412, retrieving a role and associated permissions assigned to the tenant user using the tenant identifier. At step 414, it is determined whether the role assigned to the tenant user matches with the role defined for the artifact. If the role assigned to the tenant user does not match with the role defined for the artifact, then at step 416, the request to access the artifact is rejected. At step 418, it is determined whether the permissions associated with the role of the tenant user matches with the permissions associated with the role defined for the artifact. If the permissions associated with the role of the tenant user do not match with the permissions associated with the role defined for the artifact, then at step 420, the request to access the artifact is rejected.

If the permissions associated with the role of the tenant user match with the permissions associated with the role defined for the artifact, then at step 422, an access token authorizing the tenant user to access the requested artifact is generated. The access token may comprise the role and the associated permissions granted to the tenant user, the artifact identifier associated with the artifact, and the tenant identifier associated with the tenant user. The access token is valid for accessing the artifact during the active session. At step 424, access to the requested artifact is provided to the tenant user based on the access token. In one embodiment, at least one operation requested by the tenant user during the active session based on the access token by executing the artifact files (binary code, APIs, manifest file, etc.) associated with the artifact deployed on the cloud computing system 102. For example, the at least one operation may include providing aggregated time series performance data associated with an asset (e.g., motor) to the tenant user.

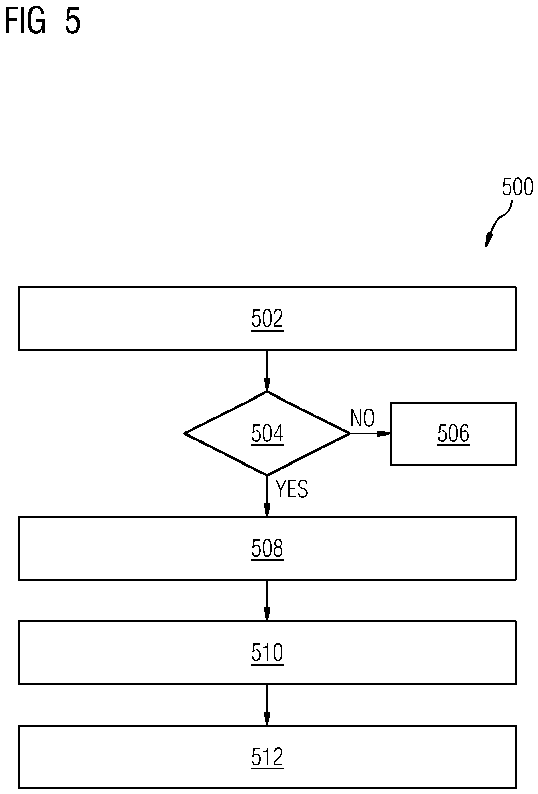

FIG 5 is a process flowchart 500 illustrating a method of performing one or more operations associated with an artifact based on a request from an authorized tenant user, according to an embodiment of the present invention. At step 502, a request to perform an operation associated with an artifact deployed in the cloud computing system 102 is received from a tenant device of a tenant user. For example, the request comprises a tenant identifier associated with the tenant user, an artifact identifier associated with the artifact, and a command to perform the operation.

At step 504, it is determined whether there exists an active session with tenant user to access the artifact using the tenant identifier. If there exists no active session, then at step 506, the request to perform the operation associated with the artifact is rejected. If the active session exists, then at step 508, a valid access token associated with the active session is retrieved from an access control database using a session identifier associated with the active session. At step 510, the requested operation is performed by executing artifact files (e.g., binary file, APIs, etc.) of the artifact based on the access token. At step 512, a response is sent to the tenant device upon performing the requested operation. For example, the response may contain aggregated time series data associated with the motor. The aggregated time series data of the motor may be displayed on a web interface of the tenant device.

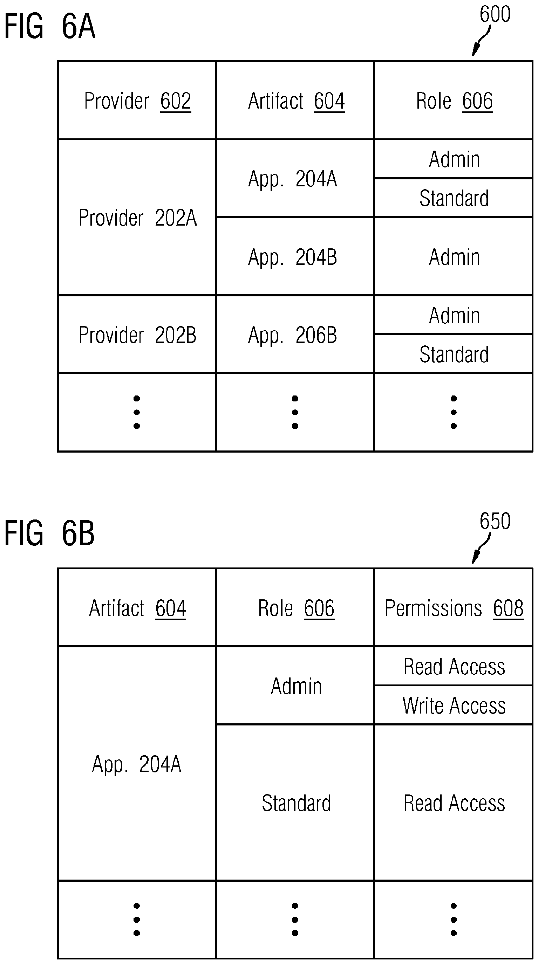

FIG 6A is a schematic representation of a lookup table 600 storing role(s) corresponding to each of artifacts deployed by various providers in the cloud computing system 102, according to an embodiment of the present invention. As shown in FIG 6A, the lookup table 600 comprises a provider field 602, an artifact field 604, and a role field 606.

The provider field 602 stores a list of providers who has deployed artifacts (e.g., applications) in the cloud computing system 102. For example, the provider field 602 stores the provider 202A and the provider 202B as the providers which have deployed one or more artifacts. The artifact field 604 stores a list of artifacts deployed by each of the providers in the provider field 602. For example, the artifact field 604 indicates that the application 204A and the application 204B belong to the provider 202A whereas the application 206B is belongs to the provider 202B. The role field 606 stores role(s) corresponding to each of the artifacts in the artifact field 604. The roles defined for each artifact enable authorized tenant users to access the respective artifact. For example, the role field 606 indicates that 'admin' role and standard' role correspond to the application 204A whereas the application 204B has 'admin' role. Similarly, 'admin' role and standard' role are created for the application 206B.

FIG 6B is a schematic representation of a lookup table 650 storing permissions corresponding to roles created for the artifacts, according to an embodiment of the present invention. As shown in FIG 6B, the lookup table 650 comprises the artifact field 604, the role field 606, and a permissions field 608.

The artifact field 604 stores a list of artifacts deployed by the providers in the cloud computing system 102. For example, the artifact field 604 stores the application 204A. The role field 606 stores roles corresponding to the artifact in the artifact field 604. For example, the role field 606 indicates that the application 204A has 'admin' role and standard' role. The permissions field 608 stores permission(s) associated with each of the roles defined for the artifacts. The permissions associated with each role enable authorized tenant users to perform a set of operations associated with the artifact. For example, the permissions field 608 indicates that 'admin' role has a read access permission and a write access permission, whereas standard' role has a read access permission for accessing the application 204A. It can be noted that the lookup tables 600 and 650 are updated by the access control module 132 when a new artifact is added, a new role and associated permissions are added/deleted/updated, or the artifact is removed.

FIG 7 is a schematic representation of a lookup table 700 storing identifiers of tenants who have subscribed to one or more artifacts deployed by various providers, according to an embodiment of the present invention. The lookup table 700 includes a provider field 702, an artifact field 704, and a tenant field 706. The provider field 702 stores a list of providers who has deployed one or more artifacts in the productive environment. For example, the provider field 702 indicates that the provider 202A and the provider 202B have deployed the artifacts in the productive environment. The artifact field 704 stores a list of artifacts deployed by the providers in the provider field 702 in the productive environment. For example, the artifact field 704 indicates that the application 204A and the application 204B are deployed by the provider 202A. Also, the artifact field 704 indicates that the application 206B is deployed by the provider 202B.

The tenant field 706 stores tenant identifiers associated with tenants who have subscribed to the artifacts listed in the artifact field 704. For example, the tenant 106A and the tenant 106B have subscribed to access the application 204A, whereas the tenant 106A has subscribed to the application 204B. Similarly, the tenant 106N and the tenant 106A have subscribed to the application 206B. It can be noted that the lookup table 700 is updated by the access control module 132 when a new tenant is added or deleted for at least one artifact in the artifact field 702.

FIG 8 is a schematic representation of a lookup table 800 storing identifiers of tenant users who are authorized to access one or more artifacts based on assigned roles, according to an embodiment of the present invention. As shown in FIG 8, the lookup table 800 includes an artifact field 802, a tenant field 804, and a role field 806.

The artifact field 802 stores a list of artifacts deployed in the productive environment. The tenant field 804 stores a list of tenant users who are assigned the artifacts in the artifact field 802. For example, the tenant field 804 indicates that tenant users 210A, 210B, 210C and 210D are assigned the application 204A by the tenant 106A. Similarly, tenant users 212A, 212B, and 212C are also assigned the application 204A by the tenant 106B. The role field 806 stores a role assigned to each of the tenant users to access the assigned artifact. For example, the role field 806 indicates that 'admin' role is assigned to the tenant user 210A to access the application 204A. Similarly, the role field 806 indicates that standard' role is assigned to the tenant user 210B to access the application 204A. It can be noted that the lookup table 800 is updated by the access control module 132 when tenant users are added or deleted, or role assigned to any of the tenant users in the tenant field 804 is updated.

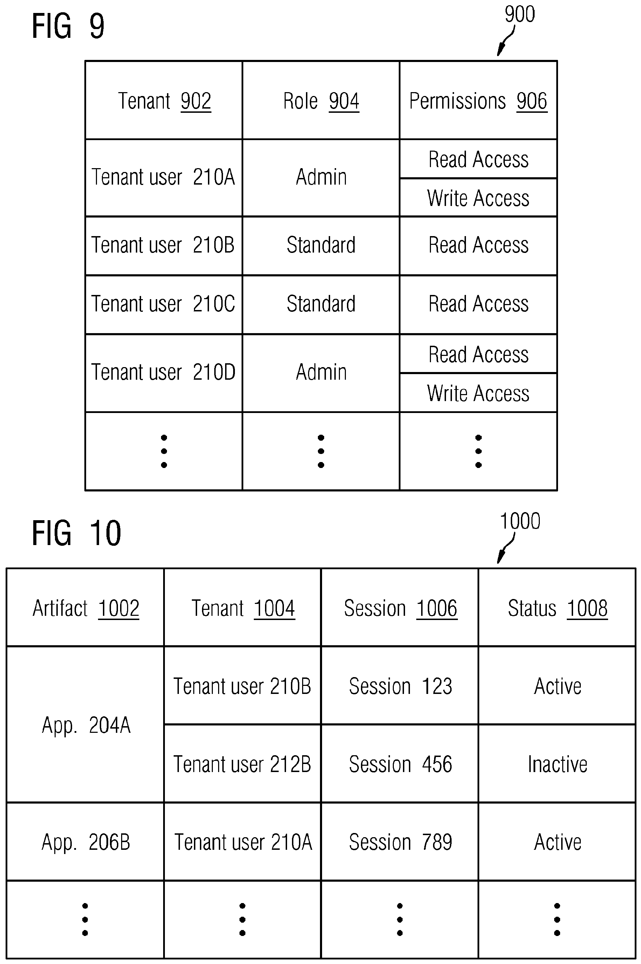

FIG 9 is a schematic representation of a lookup table 900 storing permissions associated with role assigned to each tenant user to access the application 204A, according to an embodiment of the present invention. As shown in FIG 9, the lookup table 900 includes a tenant field 902, a role field 904, and a permissions field 906.

The tenant field 902 stores a list of tenant users which are assigned to the application 204A. The role field 904 stores a role assigned to each of the tenant users in the tenant field 902. For example, the role field 904 indicates that 'admin' role is assigned to the tenant user 210A to access the application 204A. Similarly, the role field 904 indicates that standard' role is assigned to the tenant user 210B to access the application 204A. The permissions field 906 stores permissions associated with each role in the role field 904. For example, the permissions field 906 indicates that the tenant user 210A, who is assigned 'admin' role, has read access permission and write access permission to access the application 204A. Similarly, the permissions field 906 indicates that the tenant user 210B, who is assigned standard' role, has read access permission to access the application 204A. It can be noted that the lookup table 800 is updated by the access control module 132 when tenant users in the tenant field 902 are added or deleted, or role assigned to any of the tenant users in the tenant field 904 is updated.

One skilled in the art would understand that the access control module 132 is configured to access the above lookup tables to determine whether a tenant user is authorized to access a requested artifact based on role and permissions defined for the requested artifact.

FIG 10 is a schematic representation of a lookup table 1000 storing status of sessions associated with artifacts, according to an embodiment of the present invention. As shown in FIG 10, the lookup table 1000 comprises an artifact field 1002, a tenant user field 1004, a session field 1006, and a status field 1008.

The artifact field 1002 stores a list of artifacts for which at least one session is established. The tenant field 1004 stores a list of tenant users who has established a session to access the artifacts in the artifact field 1002. The session field 1006 stores a list of sessions recently established between the tenant users in the tenant field 1004 and the artifacts in the artifact field 1002. For example, the session field 1006 indicates that a 'session 123' is associated with the tenant user 210B to access the application 204A whereas a 'session 456' is associated with the tenant user 212B to access the application 204A. The status field 1008 indicates status corresponding to the sessions in the session field 1006. For example, the status field 1008 indicates that the 'session 123' is active whereas 'session 456' is inactive. Based on the lookup table 1000, the access control module 132 determines whether an active session exists with a tenant user requesting access to a specific artifact deployed in a productive environment. The access control module 132 reuses an access token issued for the active session to provide access to the requested artifact if the active session exists. The access control module 132 updates the lookup table 1000 when status of session changes or a new session is established. The access control module 132 also deletes the session entries which are inactive for a pre-defined duration (e.g., 1 hour).

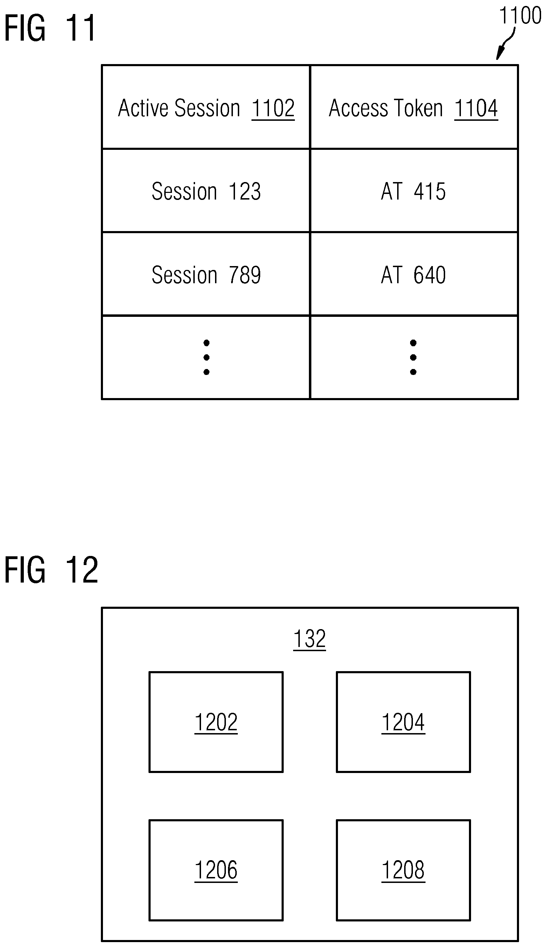

FIG 11 is a schematic representation of a lookup table 1100 storing relationship between the active sessions and access tokens, according to an embodiment of the present invention. As shown in FIG 11, the lookup table 1100 comprises an active session field 1102 and an access token field 1104.

The active session field 1102 stores a list of active session between the tenant users and the artifacts. For example, the active session field 1102 indicates that 'session 123' and 'session 789' are currently active, as can be seen from FIG 10. The access token field 1104 stores a list of access token associated with the active sessions. For example, an access token 'AT 415' is issued for 'session 123' whereas an access token 'AT640' is issued for 'session 789'. The access token indicate that the tenant user 210A is authorized to access the application 204A during the active 'session 123' based on the granted role and permissions (also known as scope of access token). Therefore, when a request for accessing a specific artifact is received from a tenant user, the access control module 132 accesses the lookup table 1100 to determine access token associated with an active session between the tenant user and the specific artifact. It can be noted that the lookup table 1100 is updated by the access control module 132 when the status of session changes or new active session is established.

FIG 12 illustrates a block diagram of the access control module 132 for managing access to artifacts by authorized tenant user, according to an embodiment of the present invention. The access control module 132 comprises a gateway module 1202, an identity module 1204, an authorization module 1206, and an authentication module 1208.

The gateway module 1202 is configured to determine whether a valid session is established with a tenant device (e.g., the device 130A) of a tenant user to access an artifact. The valid session indicates that the tenant user is authenticated. The gateway module 1202 is configured to determine whether the tenant associated with the tenant user has valid subscription to access the artifact. The gateway module 1202 is configured to retrieve an access token associated with the session if the session is valid and subscription is valid.

The identity module 1204 is configured to determine roles and permissions assigned to the tenant user using the lookup tables 800 and 900. The identity module 1204 is configured to generate a response including the roles and permissions assigned to the tenant user.

The authorization module 1206 is configured to determine whether the roles and permissions assigned to the tenant user matches with at least one role and associated permission defined for the artifact. In other words, the authorization module 1206 determines whether the tenant user is authorized to access the request artifact based on the roles and permission assigned to the tenant user. The authorization module 1206 is configured to generate an access token including the roles and permissions of the tenant user and the artifact identifier if the tenant user is authorized to access the artifact.

The authentication module 1208 is configured to perform initial authentication of a tenant user based on valid credentials of the tenant user for accessing cloud services. For example, the valid credentials may be username and password combination or two factor authentication.

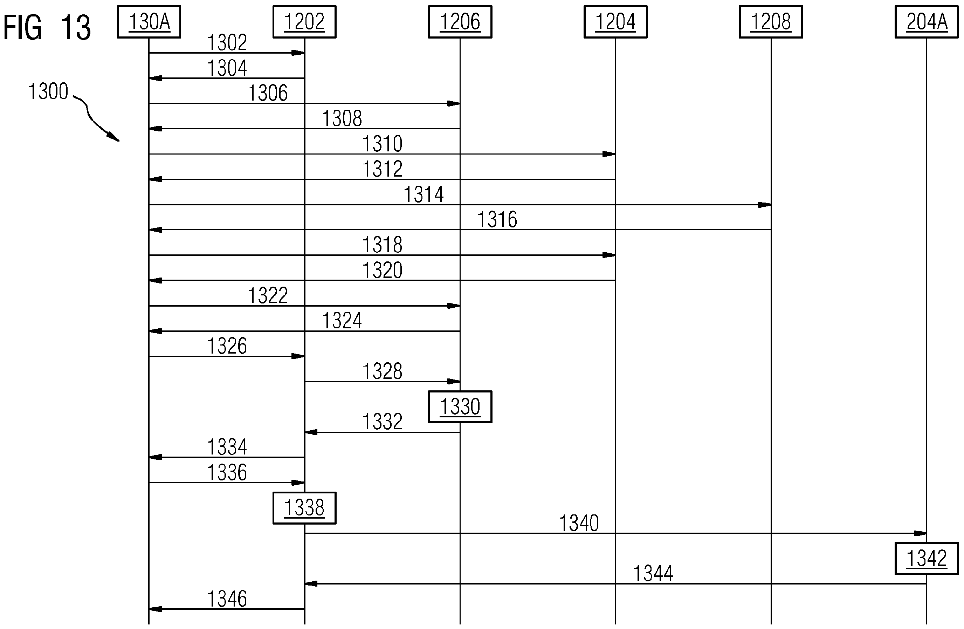

FIG 13 is a flow diagram 1300 illustrating an exemplary method of providing access to artifacts to authorized tenant user 210As, according to an embodiment of the present invention. Consider that a tenant user 210A is trying to access an application 204A via a tenant device 130A (e.g., using a web browser). For example, the application 204A can be an application for monitoring performance of assets 108A-N in an industrial plant 106. At step 1302, the tenant device 130A sends a request to provide access to the application 204A. The request comprises a tenant identifier of the tenant user 210A and an artifact identifier of the application 204A. At step 1304, the gateway module 1204 determines that there is no valid session with the tenant device 130A and redirects the request back to the tenant device 130A. At step 1306, the tenant device 130A redirects the request to the authorization module 1206. At step 1308, the authorization module 1206 determines that there is no valid session with the tenant device 130A and redirects the request back to the tenant device 130A.

At step 1310, the tenant device 130A redirects the request to the identity module 1204. At step 1312, the identity module 1204 determines that there is no valid session with the tenant device 130A and redirects the request to the tenant device 130A. At step 1314, the tenant device 130A redirects the request to the authentication module 1208. At step 1316, the authentication module 1208 authenticates the tenant user 210A based on valid login credentials and sends an authentication response to the tenant device 130A.

At step 1318, the tenant device 130A forwards the authentication response from the authentication module 1208 to the identity module 1204. At step 1320, the identity module 1204 determines a role and permissions assigned to the tenant user 210A to access the application 204A and sends a response with the assigned role and associated permissions to the tenant device 130A.

At step 1322, the tenant device 130A sends the response with a role and permissions assigned to the tenant user 210A to the authorization module 1206. At step 1324, the authorization module 1206 redirects the tenant device 130A to an application callback endpoint. At step 1326, the tenant device 130A sends a request to the application callback endpoint to the gateway module 1202. At step 1328, the gateway module 1202 sends a request to issue an access token for providing access to the application 204A to the tenant device 130A. At step 1330, the authorization module 1206 generates an access token of the session with the tenant device 130A. The access token defines role and permission granted to the tenant user 210A to access the application 204A. The role and permissions are granted to the tenant user 210A based on the role and permissions assigned to the tenant user 210A by the tenant 106A, and the role and permissions defined for the application module 204A.

At step 1332, the authorization module 1206 sends the access token to the gateway module 1202. Also, the authorization module 1206 stores the access token in the IAM database 134 so that the access token can be reused for authorizing the tenant user 210A to access the application 204A during the current session. Advantageously, this would save time and efforts to authenticate and authorize the tenant user 210A for providing access to the application 204A.

At step 1334, the gateway module 1202 provides access to the application 204A to the tenant user 210A. In one embodiment, a web page associated with the application 204A is displayed on the tenant device 130A of the tenant user 210A. At step 1336, the tenant device 130A sends a request to perform an operation associated with the application 204A to the gateway module 1202. At step 1338, the gateway module 1202 retrieves the access token associated with the session with the tenant user 210A. The tenant user 210A may want to check performance of a motor (e.g., the asset 108A) in the industrial plant 106. In such a case, the tenant user 210A requests for performance data of the motor collected for one day to the application 204A. At step 1340, the gateway module 1202 sends a request to perform the requested operation to the application 204A and/or associated APIs configured for providing the performance data of the motor to the tenant user. At step 1342, the application 204A performs the requested operation using the APIs (i.e., fetches raw/aggregated performance data of the motor from a repository) based on the access token (i.e., granted role and permissions).

At step 1344, the application 204A sends a response comprising the performance data of the motor to the gateway module 1202. At step 1346, the gateway module 1202 forwards the performance data of the motor to the tenant device 130A. Accordingly, the tenant device 130A visualizes the performance data of the motor on a web page associated with the application 204A. One skilled in the art can understand that several such operations can be requested and performed by the application 204A during the active session based on the roles and associated permissions assigned to the tenant user 210A.

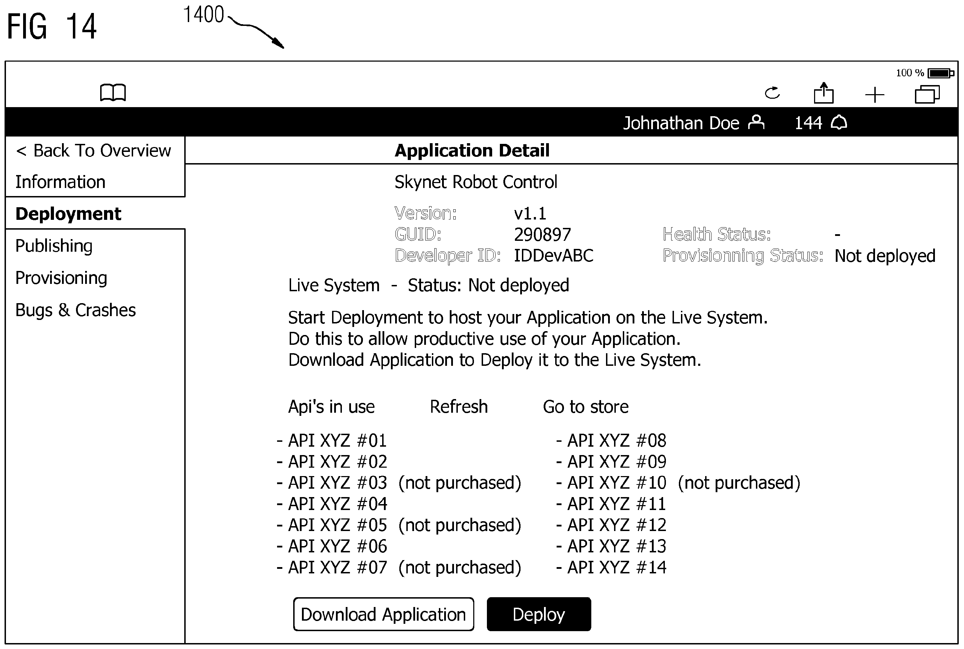

FIG 14 is a graphical user interface 1400 which enables a provider to deploy an artifact in a productive environment. In FIG 14, the graphical user interface 1400 depicts details of an artifact (i.e., skynet robot control application) ready for deployment in the productive environment. The graphical user interface 1400 also displays APIs required for deployment of the artifact in the productive environment. The graphical user interface 1400 also provides a deploy button which enables the provider to trigger deployment of the application in the productive environment.

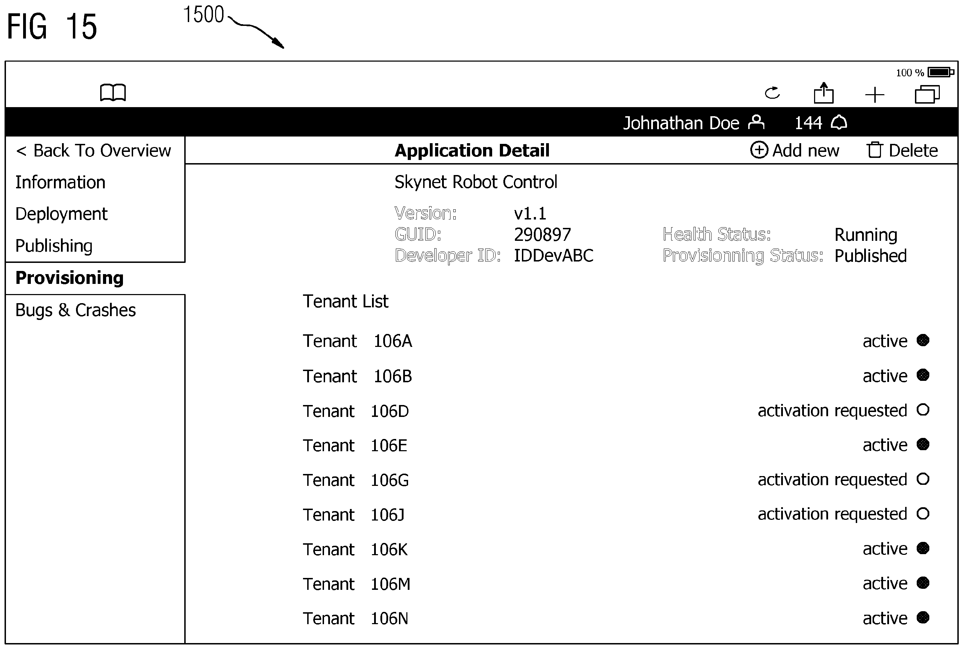

FIG 15 is a graphical user interface 1500 displaying status of the artifact corresponding to tenants. In FIG 15, the graphical user interface 1500 displays tenants who have subscribed access to the deployed artifact (i.e., skynet robot control application) along with status (active, activation requested) for respective tenants.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A method of managing access to artifacts deployed in a cloud computing system by authorized tenants, the method comprising:
receiving a request to access an artifact deployed on the cloud computing system from a tenant device associated with a tenant user, wherein the request comprises a tenant identifier of the tenant user, and an artifact identifier, wherein the artifact associated with a provider;
determining whether the tenant user is authorized to access the artifact associated with the artifact identifier using the tenant identifier based on at least one role and associated permissions to access the artifact; and
providing access to the artifact associated with the artifact identifier to the tenant device when the tenant user is authorized to access the requested artifact.

2. The method according to claim 1, further comprising:
rejecting the request to access the artifact associated with the artifact identifier when the tenant user is not authorized to access the requested artifact; and
sending a notification indicating that the tenant user is not authorized to access the artifact associated with the artifact identifier to the tenant device.

3. The method according to claim 1 or 2, further comprising:
determining whether there exists an active session with the tenant device based on the tenant identifier; and
establishing a session with the tenant device when there exists no active session with the tenant device.

4. The method according to claim 1 or 3, wherein determining whether the tenant user is authorized to access the artifact associated with the artifact identifier comprises:
determining at least one role defined for the artifact based on the artifact identifier;
determining one or more permissions assigned to the role defined for the artifact;
retrieving a role and associated permissions assigned to the tenant user using the tenant identifier;
determining whether the role assigned to the tenant user matches with the role defined for the artifact; and
if the role assigned to the tenant user matches with the role defined for the artifact, determining whether the permissions associated with the role of the tenant user matches with the permissions associated with the role defined for the artifact.

5. The method according to claim 4, wherein providing access to the artifact associated with the artifact identifier comprises:
generating an access token for providing access to the requested artifact, wherein the access token comprises the role and the associated permissions granted for the tenant user, and the tenant identifier associated with the tenant user; and
providing access to the requested artifact to the tenant user based on the access token.

6. The method according to claim 1 or 5, wherein providing access to the request artifact based on the access token comprises:
performing at least one operation requested by the tenant user by executing the artifact deployed in the cloud computing system based on the access token.

7. The method according to claim 5 or 6, wherein the access token is valid during the active session between the artifact and the tenant user.

8. The method according to claim 6 or 7, further comprising:
receiving a request to perform an operation associated with the artifact deployed in the cloud computing system from the tenant user, wherein the request comprises a tenant identifier, an artifact identifier, and a command to perform the operation;
determining whether a session with the tenant user to access the artifact is active using the tenant identifier;
if the session with the tenant user is active, retrieving a valid access token associated with the session with the tenant user from a token database using a session identifier associated with the active session;
performing the requested operation by executing artifact files associated with the artifact deployed in the cloud computing system; and
sending a response to the tenant device upon performing the requested operation.

9. A method of managing artifacts deployed on a distributed system to one or more tenants, comprising:
receiving a request to deploy at least one artifact on the cloud computing system from a provider, wherein the request comprises a provider identifier associated with the provider and an artifact identifier associated with the artifact;
creating at least one role corresponding to the requested artifact by one or more authorized tenant users;
defining one or more permissions to access the requested artifact by the one or more authorized tenant users;
associating the one or more permissions to the assigned role associated with the artifact;
deploying the artifact on the cloud computing system based on the request from the provider; and
provisioning the artifact to one or more tenants of the cloud computing system so that the one or more tenants can access the artifact using tenant devices connectively coupled to the cloud computing system.

10. The method according to claim 9, further comprising:
assigning the artifact to at least one tenant user by each of the tenants.

11. The method according to claim 9 or 10, wherein assigning the artifact to at least one tenant user by each of the tenants comprises:
assigning the at least one role associated with the artifact to the at least one tenant user; and
assigning the one or more permissions associated with the assigned role to the at least one tenant user, wherein the at least one tenant user is authorized to access the artifact based on the assigned role and the associated permissions.

12. The method according to any of the claims 9 to 11, further comprising:
storing at least one lookup table comprising the artifact identifier associated with the deployed artifact, the at least one role, the associated permissions and tenant identifier associated with the tenant users authorized to access the artifact corresponding to the role.

13. A system comprising:
one or more processing units;
one or more memory units accessible by the one or more processing units, wherein at least one memory unit comprises machine-readable instructions executable by the one or more processing units, that may cause the one or more processing units to perform methods according to claims 1 to 12.

14. A computing environment comprising a system of claim 13, and one or more tenant devices communicatively coupled to the system.

15. A computer program product, having machine-readable instructions stored therein, that when executed by one or more processing units, cause the one or more processing units to perform method steps according to claims 1 to 12.
